Europäisches Patentamt

European Patent Office

Office européen des brevets

(11) Publication number: **0 144 856**
**B1**

(12) **EUROPEAN PATENT SPECIFICATION**

(45) Date of publication of patent specification: **01.03.89**

(51) Int. Cl.⁴: **G 01 T 1/29,** G 06 K 7/10, G 02 B 6/28

(21) Application number: **84114046.0**

(22) Date of filing: **20.11.84**

(54) Radiation image read-out apparatus.

(30) Priority: **22.11.83 JP 218678/83**
**23.03.84 JP 55351/84**

(43) Date of publication of application:
**19.06.85 Bulletin 85/25**

(45) Publication of the grant of the patent:
**01.03.89 Bulletin 89/09**

(84) Designated Contracting States:
**DE FR NL**

(56) References cited:
FR-A-2 438 300
GB-A- 793 045
US-A-3 488 511
US-A-4 346 295

(73) Proprietor: **FUJI PHOTO FILM CO., LTD.**
**210 Nakanuma Minami Ashigara-shi**
**Kanagawa 250-01 (JP)**

(72) Inventor: **Noguchi, Masaru c/o Fuji Photo Film**
**Co., Ltd.**
**798 Miyanodai Kaisei-machi**
**Ashigarakami-gun Kanagawa-ken (JP)**
Inventor: **Horikawa, Kazuo c/o Fuji Photo Film**
**Co., Ltd.**
**798 Miyanodai Kaisei-machi**
**Ashigarakami-gun Kanagawa-ken (JP)**
Inventor: **Ohga, Akihiro c/o Fuji Photo Film Co.,**
**Ltd.**
**798 Miyanodai Kaisei-machi**
**Ashigarakami-gun Kanagawa-ken (JP)**
Inventor: **Goto, Chiaki c/o Fuji Photo Film Co.,**
**Ltd.**
**798 Miyanodai Kaisei-machi**
**Ashigarakami-gun Kanagawa-ken (JP)**

(74) Representative: **Patentanwälte Grünecker,**
**Kinkeldey, Stockmair & Partner**
**Maximilianstrasse 58**
**D-8000 München 22 (DE)**

Courier Press, Leamington Spa, England.

## Description

This invention relates to a radiation image read-out apparatus in accordance with the generic clause of claim 1.

When certain kinds of phosphors are exposed to a radiation such as X-rays, α-rays, β-rays, γ-rays, cathode rays or ultraviolet rays, they store a part of the energy of the radiation. Then, when the phosphor which has been exposed to the radiation is exposed to stimulating rays such as visible light, light is emitted by the phosphor in proportion to the stored energy of the radiation. A phosphor exhibiting such properties is referred to as a stimulable phosphor.

As disclosed, for example, in U.S. Patent No. 4,239,968, it has been proposed to use a stimulable phosphor in a radiation image recording and reproducing system.

Specifically, a sheet provided with a layer of the stimulable phosphor (hereinafter referred to as a stimulable phosphor sheet) is first exposed to a radiation passing through an object to have a radiation image thereof stored therein, and is then scanned with stimulating rays such as a laser beam which cause it to emit light in the pattern of the stored image. The light emitted by the stimulable phosphor sheet upon stimulation thereof is photoelectrically detected and converted to an electric image signal, which is processed as desired to reproduce a visible image of the object on a recording medium such as a photographic light-sensitive material or on a display device such as a cathode ray tube (CRT).

The radiation image read-out apparatus used in the aforesaid radiation image recording and reproducing system comprises a stimulating ray optical system for exposing a stimulable phosphor carrying a radiation image stored therein to stimulating rays, a photodetector for detecting light emitted by the stimulable phosphor upon exposure to the stimulating rays, and a light guide member for guiding the emitted light to the photodetector. One end face of the light guide member is positioned close to the stimulable phosphor, and the other end face thereof is optically connected to the photodetector.

In the aforesaid radiation image recording and reproducing system, the energy of the light emitted by the stimulable phosphor sheet when it is exposed to stimulating rays is very much smaller than the energy of stimulating rays (approximately $10^{-5}$ times the energy of stimulating rays), and the emitted light is non-directional. Therefore, when the read-out apparatus is fabricated, the light receiving solid angle of the light guide member should be made as large as possible to guide as much emitted light as possible and improve the S/N ratio.

Accordingly, the applicant proposed in U.S. Patent No. 4,302,671 to provide the light receiving face of the photodetector, which is positioned close to a stimulable phosphor sheet in face-to-face relation, with a reflecting mirror or a triangular prism sufficiently smaller than the area of the light receiving face of the photodetector so that the reflecting mirror or the triangular prism protrudes from the light receiving face. In this technique, stimulating rays such as a laser beam incident laterally and exhibiting high directivity are reflected by the reflecting mirror or the triangular prism onto the stimulable phosphor sheet. However, in this case, a space at least equal to the amount of protrusion of the reflecting mirror or the triangular prism must be left between the light receiving face and the stimulable phosphor sheet. Therefore, the light receiving solid angle of the light guide member becomes small.

The applicant also proposed in U.S. Patent No. 4,346,295, to which claim 1 refers in the generic clause, to position a light guide member having a special shape so that one end face (light input face) is close to a stimulable phosphor sheet in face-to-face relation thereto along a scanning line of stimulating rays, and to guide light emitted by the stimulable phosphor sheet upon stimulation thereof to a photodetector by use of the light guide member. However, in this case, since it is necessary to prevent interference between the stimulating rays and the light guide member, it is impossible to cover the whole area above the scanning line by the light input face of the light guide member and to make the light receiving solid angle sufficiently large.

Therefore, in aforesaid U.S. Patent No. 4,346,295, the applicant further proposed to position a light reflecting means standing face to face with the light input face of the light guide member so that light emitted by the stimulable phosphor sheet in the direction opposite to the light input face is reflected by the light reflecting means and guided to the light input face. However, even in this technique, a space for passing the stimulating rays must be left between the light input face of the light guide member and the light reflecting means, and the problem that a part of the light emitted by the stimulable phosphor sheet is lost is not solved.

As described above, in the conventional radiation image read-out apparatuses, since a part of the light emitted by the stimulable phosphor sheet is lost without being detected, the amount of the stimulating rays must be made large for increasing the amount of light emitted by the stimulable phosphor sheet, and the stimulating ray source becomes large. Also, for the same reason, the scanning speed is limited.

Accordingly, the primary object of the present invention is to provide a radiation image read-out apparatus wherein the solid angle for receiving light emitted by a stimulable phosphor sheet upon stimulation thereof is made sufficiently large, and nearly all emitted light is received and detected, and

wherein the S/N ratio is improved, the stimulating ray source is made small, and the scanning speed is increased.

The present invention provides a radiation image read-out apparatus provided with a stimulating ray optical system for exposing a stimulable phosphor carrying a radiation image stored therein to stimulating rays, a photodetector for detecting light emitted by the stimulable phosphor upon exposure to said stimulating rays, and a light guide member for guiding the emitted light to said photodetector, said light guide member having one end face positioned close to the stimulable phosphor and the other end face optically connected to said photodetector,

Wherein the improvement comprises:

i) positioning a dichroic optical plane, which selectively reflects either said stimulating rays or said light emitted by the stimulable phosphor and selectively passes the other, between the one and the other end face of said light guide member, and

ii) positioning said stimulating ray optical system so that said stimulating rays directly impinge upon said dichroic optical plane and come out of said one end face of said light guide member positioned close to the stimulable phosphor by being reflected by said dichroic optical plane or by passing therethrough, thereby stimulating the stimulable phosphor.

In the present invention, a dichroic optical plane is positioned in an optical path of a light guide member for guiding the light, which is emitted by a stimulable phosphor when it is exposed to stimulating rays, to a photodetector and the stimulating rays are made to impinge upon the stimulable phosphor from an end face of the light guide member standing face to face with the stimulable phosphor. Therefore, it is possible to gather light emitted by the stimulable phosphor into the light guide member from the entire end face thereof covering the light emitting portion of the stimulable phosphor, and the solid angle at which the emitted light is received by the end face of the light guide member becomes large. When the end face of the light guide member is positioned closer to the stimulable phosphor, the light receiving solid angle is further increased, and it becomes possible to receive almost all light emitted by the stimulable phosphor toward the light guide member. Accordingly, it becomes possible to improve the S/N ratio. Also, since the amount of light received by the light guide member increases, it is possible to decrease the amount of stimulating rays and to make the stimulating ray source smaller than in the conventional apparatus while the S/N ratio is maintained on the same level. Further, in the case where the same stimulating ray source is used, it becomes possible to increase the scanning speed.

The above-mentioned radiation image read-out apparatus in accordance with the present invention has excellent technical effects as described above. However, it was found that a problem as described below still arises in the radiation image read-out apparatus. That is, stimulating rays reflected by the surface of a stimulable phosphor sheet are further reflected by the light input face of the light guide member onto other portions of the stimulable phosphor sheet that should not be exposed to the stimulating rays in the exposure step at that time. As a result, light is emitted also by the other portions of the stimulable phosphor sheet and enters the light guide member. Such light constitutes noise and adversely affects the sharpness and contrast of the reproduced image.

The aforesaid problem can be solved by providing the light input face of the light guide member with a stimulating ray reflection preventing film so that stimulating rays are prevented from being reflected by the light input face of the light guide member and impinging upon the other portions of the stimulable phosphor sheet.

The stimulating ray reflection preventing film is an optical layer which may allow slight reflection of light emitted by the stimulable phosphor sheet and having a wavelength within the range between 300 nm and 500 nm but which does not reflect stimulating rays having a wavelength longer than that of the light emitted by the stimulable phosphor sheet. The stimulating ray reflection preventing film is composed, for example, of a deposited thin film of a material exhibiting a refractive index smaller than that of the material of the light guide member. Since the light guiding efficiency is improved when light emitted by the stimulable phosphor sheet is prevented from being reflected by the light input face of the light guide member, the stimulating ray reflection preventing film should preferably be formed as a reflection preventing film for preventing reflection of not only the stimulating rays but also other light over a wide wavelength range.

The present invention will hereinbelow be described in further detail with reference to the accompanying drawings, in which:

Figure 1 is a schematic view showing the basic configuration of an X-ray image recording and reproducing system in which the radiation image read-out apparatus in accordance with the present invention is employed,

Figure 2 is a perspective view showing an embodiment of the radiation image read-out apparatus in accordance with the present invention,

Figure 3 is a sectional view taken along line III—III of Figure 2,

Figure 4 is a graph showing the spectral characteristics of the dichroic optical plane in the apparatus of Figure 2,

Figure 5 is a perspective view showing another embodiment of the radiation image read-out apparatus in accordance with the present invention,

Figure 6 is a sectional view taken along line VI—VI of Figure 5,

Figure 7 is a graph showing the spectral characteristics of the dichroic optical plane in the apparatus of Figure 5,

Figures 8, 9 and 10 are perspective views showing further embodiments of the radiation image read-out apparatus in accordance with the present invention, and

Figures 11, 12 and 13 are sectional views showing major parts of still further embodiments of the radiation image read-out apparatus in accordance with the present invention.

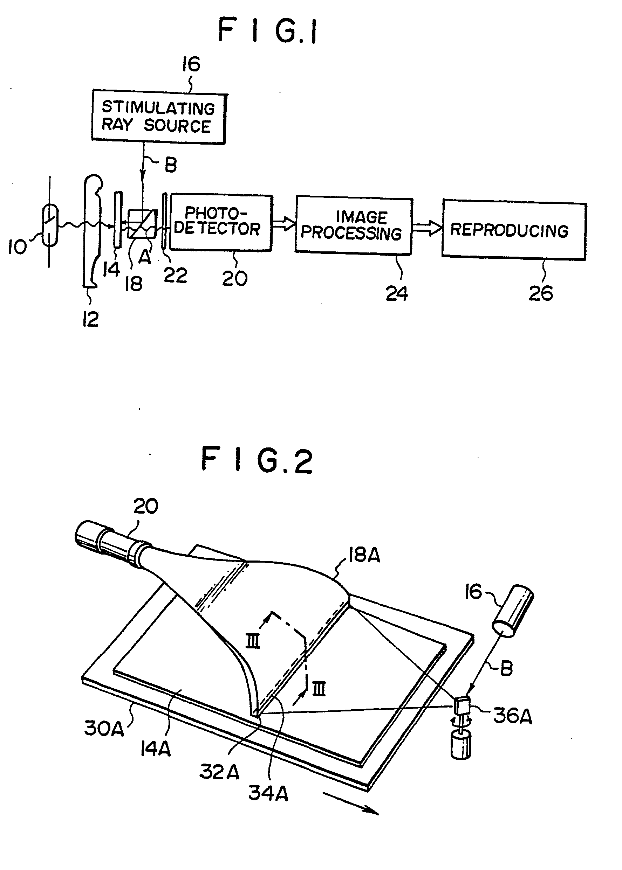

Figure 1 shows the basic configuration of the X-ray image recording and reproducing system in which the radiation image read-out apparatus in accordance with the present invention is employed. X-rays emitted by an X-ray tube 10 pass through an object 12 such as a patient to an extent depending on the difference in the X-ray transmittance between portions of the object 12. The X-rays impinge upon a stimulable phosphor sheet 14, and X-ray energy is stored therein in accordance with the amount of X-rays impinging thereupon. That is, a latent X-ray image is stored in the stimulable phosphor sheet 14. The stimulable phosphor constituting the stimulable phosphor sheet 14 may, for example, be a rare earth element activated alkaline earth metal fluorohalide phosphor as disclosed in U.S. Patent No. 4,239,968. When this phosphor is exposed to stimulating rays, it emits light A having a wavelength within the range of 300 nm to 500 nm.

The stimulable phosphor sheet 14 carrying the latent X-ray image stored therein is then exposed to stimulating rays B emitted by a stimulating ray source 16. In order to facilitate separation from the light A emitted by the stimulable phosphor sheet 14 upon stimulation thereof, the wavelength distribution of the stimulating rays B should be different from and far apart from the wavelength distribution of the light A emitted by the stimulable phosphor sheet 14. Namely, the spectrum of the stimulating rays B should not overlap the spectrum of the light A emitted by the stimulable phosphor sheet 14. Accordingly, the stimulating rays B should preferably be a He—Ne laser beam (633 nm), a YAG laser beam (1064 nm), a ruby laser beam (694 nm), a semiconductor laser beam (700—1300 nm), or the like, which has a wavelength longer than that of the light A emitted by the stimulable phosphor sheet 14.

The stimulating rays B are passed through a light guide member 18 as described later and are made to impinge upon the stimulable phosphor sheet 14. The light A emitted by the stimulable phosphor sheet 14 when it is exposed to the stimulating rays B is passed through the light guide member 18 and is guided to a photodetector 20. As the photodetector 20, a photomultiplier should preferably be used. The light guide member 18 is provided with a dichroic optical plane for separating the stimulating rays B from the light A emitted by the stimulable phosphor sheet 14. In the case where the separation is incomplete and the stimulating rays B slightly enter the photodetector 20, a filter 22 for selectively passing only the light A emitted by the stimulable phosphor sheet 14 should preferably be positioned at the light receiving face of the photodetector 20.

The light A detected by the photodetector 20 is converted thereby into an electric image signal, which is then electrically processed by an image processing device 24 and is used in a reproducing device 26 to reproduce a visible image in a recording material such as a photographic film or on a display device such as a CRT.

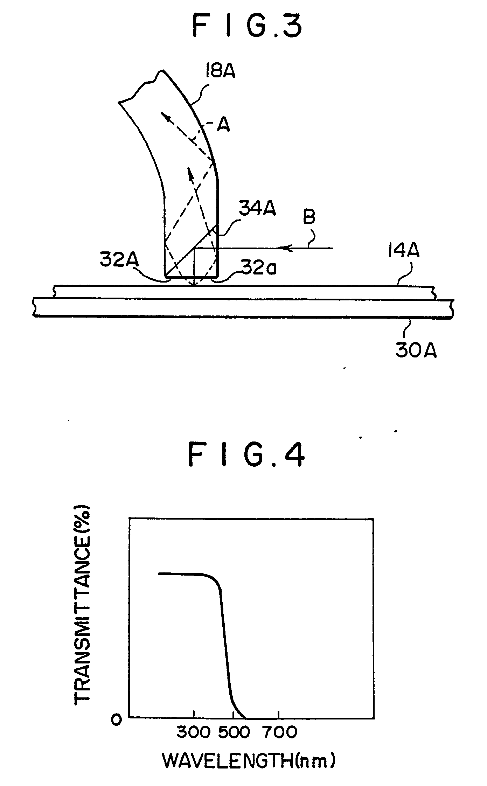

Figure 2 is a perspective view showing an embodiment of the radiation image read-out apparatus in accordance with the present invention, and Figure 3 is a sectional view taken along line III—III of Figure 2. In this embodiment, a stimulable phosphor sheet 14A is supported on a flat plate-like feed base 30A. A light guide member 18A is fabricated into a gradually bent sheet shape by use of a transparent material such as glass or an acrylic resin sheet. The light guide member 18A is positioned so that one end face (light input face) 32A extends normal to the feed direction of the feed base 30A and stands face to face with and close to the surface of the stimulable phosphor sheet 14A approximately in parallel thereto. The light input face 32A is provided with a stimulating ray reflection preventing film 32a as shown in Figure 3.

The stimulating ray reflection preventing film 32a prevents reflection of the stimulating rays B and, preferably, also prevents reflection of the light A emitted by the stimulable phosphor sheet 14A, thereby efficiently guiding the light A emitted by the stimulable phosphor sheet 14A into the light guide member 18A. As the stimulating ray reflection preventing film 32a exhibiting such optical property, it is possible to use, for example, a deposited thin film of a material exhibiting a refractive index smaller than that of the material of the light guide member 18A. In the case where the deposited thin film is provided, reflection of the stimulating rays B becomes minimum when the optical thickness of the deposited thin film is a quarter of the wavelength of the stimulating rays B. Reflection of the stimulating rays B is completely eliminated when the condition $n_1 = \sqrt{n_2}$ holds between the refractive index $n_1$ of the deposited thin film material and the refractive index $n_2$ of the light guide member material. When the light guide member 18A is fabricated of a plastic material or glass, the material of the deposited thin film positioned on the light input face of the light guide member 18A may be $MgF_2$, $CaF_2$, cryolite, or the like. The deposited thin film prevents reflection of the stimulating rays B and the light A emitted by the stimulable phosphor sheet 14A. Therefore, the light A emitted by the stimulable phosphor sheet 14A is efficiently guided into the light guide member 18A.

The aforesaid deposited thin film is a mere example of the stimulating ray reflection preventing film 32a positioned on the light input face 32A of the light guide member 18A. The stimulating ray reflection preventing film 32a is not limited to the deposited thin film, and may be constituted by any film insofar as it prevents reflection of the stimulating rays B.

The other end (light output face) of the light guide member 18A is ring-shaped to match the shape of the light receiving face of the photodetector 20. As shown in Figure 3, a dichroic optical plane 34A is longitudinally positioned at the end portion of the light input face 32A side of the light guide member 18A at an angle of 45° with respect to the light input face 32A. The dichroic optical plane 34A is incorporated by dividing the end portion of the light input face 32A side of the light guide member 18A along a plane at an angle of 45° with respect to the light input face 32A, overlaying a plurality of films, for example, of a high refractive index material and a low refractive index material on the division surface, and then joining the divided portion to the light guide member 18A. The dichroic optical plane 34A exhibits spectral characteristics as shown in Figure 4 when the angle of incidence is 45°, and should preferably exhibit a high transmittance with respect to the light A emitted by the stimulable phosphor sheet 14A over as wide range of incidence angle as possible around an angle of incidence of 45°.

The stimulating rays B emitted by the stimulating ray source 16 impinge upon the dichroic optical plane 34A approximately in parallel with the stimulable phosphor sheet 14A, and are swung by a light deflector 36A so as to scan the dichroic optical plane 34A. In order to make the stimulating rays B impinge upon the dichroic optical plane 34A approximately at a predetermined angle, a lens or a concave mirror may be positioned between the light deflector 36A and the dichroic optical plane 34A.

In the aforesaid embodiment, the stimulating rays B impinge upon the dichroic optical plane 34A laterally at an angle of incidence of 45°, and are almost entirely reflected by the dichroic optical plane 34A onto the stimulable phosphor sheet 14A via the light input face 32A of the light guide member 18A. When exposed to the stimulating rays B, the stimulable phosphor sheet 14A emits the light A in proportion to the X-ray energy stored therein. Since the area above the light emitting portion of the stimulable phosphor sheet 14A is sufficiently covered by the light input face 32A, nearly all of the light A emitted upwardly by the stimulable phosphor sheet 14A enters the light guide member 18A from the light input face 32A together with a part of the stimulating rays B reflected by the surface of the stimulable phosphor sheet 14A. The light A entering the light guide member 18A is passed through the dichroic optical plane 34A and is guided to the photodetector 20 through total reflection inside of the light guide member 18A. Thus the light A is detected by the photodetector 20. While scanning of the stimulable phosphor sheet 14A along one scanning line by the stimulating rays B is conducted, the feed base 30A is moved by a distance equal to the scanning line spacing. Then, scanning by the stimulating rays B along the next scanning line is conducted. By repeating these operations, the X-ray image stored in the stimulable phosphor sheet 14A is read out sequentially.

On the other hand, the stimulating rays B entering the light guide member 18A from the light input face 32A are reflected by dichroic optical plane 34A to the outside of the light guide member 18A. Therefore, the stimulating rays B do not advance to the photodetector 20.

Since the light input face 32A is provided with the stimulating ray reflection preventing film 32a, the stimulating rays B reflected by the surface of the stimulable phosphor sheet 14A is not reflected by the light input face 32A to the stimulable phosphor sheet 14A.

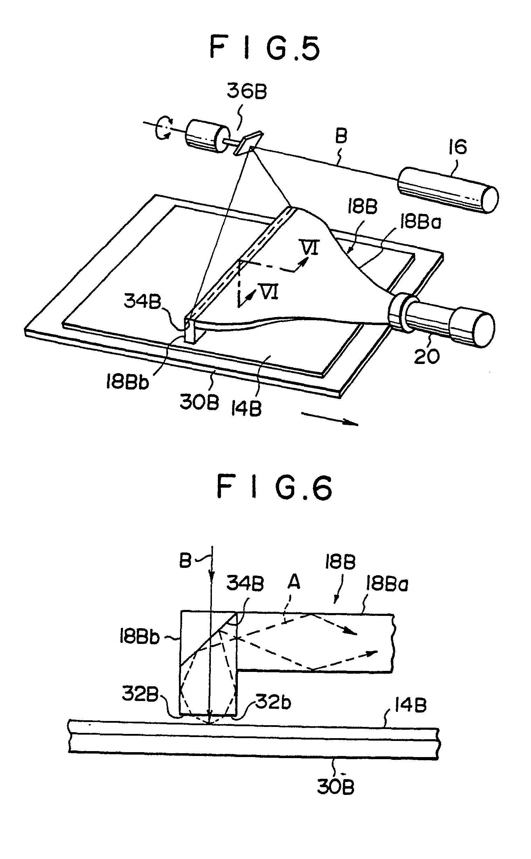

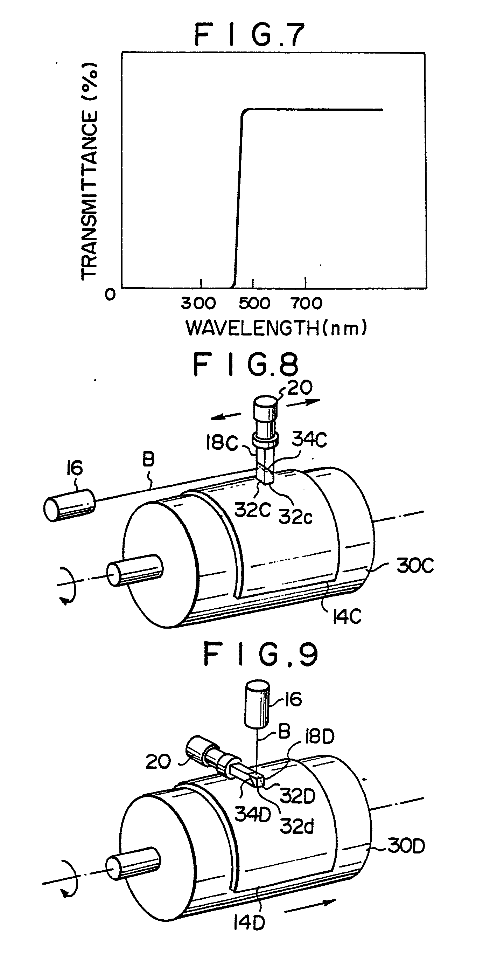

Figure 5 is a perspective view showing another embodiment of the radiation image read-out apparatus in accordance with the present invention, and Figure 6 is a sectional view taken along line VI—VI of Figure 5. In this embodiment, a light guide member 18B is constituted by a sheet-like first light guide member 18Ba approximately parallel with a stimulable phosphor sheet 14B supported on a feed base 30B, and a square bar-like second light guide member 18Bb joined to one end face of the first light guide member 18Ba. A lower end face (light input face) 32B of the second light guide member 18Bb is positioned to stand face to face with the stimulable phosphor sheet 14B approximately in parallel therewith. A dichroic optical plane 34B is positioned above the light input face 32B. The dichroic optical plane 34B is fabricated to pass the stimulating rays B impinging thereupon at an angle of incidence of 45° and to reflect the light A emitted by the stimulable phosphor sheet 14B upon stimulation thereof. Figure 7 shows the spectral characteristics of the dichroic optical plane 34B with respect to light incident at an angle of 45°. The light input face 32B is provided with a stimulating ray reflection preventing film 32b.

In the embodiment of Figure 5, the stimulating rays B emitted by the stimulating ray source 16 are swung by a light deflector 36B and are made to impinge upon the second light guide member 18Bb from above. The stimulating rays B pass through the dichroic optical plane 34B and impinge upon the stimulable phosphor sheet 14B. As shown in Figure 6, the light A emitted by the stimulable phosphor sheet 14B when it is exposed to the stimulating rays B enters the second light guide member 18Bb from the light input face 32B, and is reflected by the dichroic optical plane 34B into the first light guide member 18Ba. The light A is then guided to the photodetector 20 through total reflection inside of the first light guide member 18Ba. On the other hand, the stimulating rays B reflected by the surface of the stimulable phosphor sheet 14B are prevented by the stimulating ray reflection preventing film 32b from being reflected by the light input face 32B, and therefore do not again impinge upon the stimulable phosphor sheet 14B.

In the embodiment of Figure 5, since the light guide member 18B can be positioned approximately in parallel with the stimulable phosphor sheet 14B, it need not be bent largely as in the case of the light guide member 18B in Figure 2, and the apparatus can be made small.

Figures 8 and 9 are perspective views showing further embodiments of the radiation image read-out apparatus in accordance with the present invention, wherein stimulable phosphor sheets 14C and 14D are respectively wound around and secured to cylindrical drums 30C and 30D which are rotated for scanning the stimulable phosphor sheets 14C and 14D by stimulating rays B. In Figure 8, a long bar-like light guide member 18C is positioned in the radial direction of the drum 30C. One end face (light input face) 32C of the light guide member 18C is positioned to stand face to face with and close to the stimulable phosphor sheet 14C, and the other end (light output face) is closely contacted with the photodetector 20. The light guide member 18C is provided with a dichroic optical plane 34C exhibiting the same characteristics as those of the dichroic optical plane 34A in the embodiment of Figure 2, and a stimulating ray reflection preventing film 32c. The stimulating rays B are made to impinge upon the dichroic optical plane 34C in parallel with the rotation axis of the drum 30C, and are reflected by the dichroic optical plane 34C onto the stimulable phosphor sheet 14C.

In the embodiment of Figure 8, the light guide member 18C and the photodetector 20 are together moved by a distance equal to the scanning line spacing in parallel with the rotation axis of the drum 30C as the drum 30C is rotated one turn. In this manner, the X-ray image stored in the stimulable phosphor sheet 14C is read out.

In Figure 9, a bar-like light guide member 18D is positioned approximately horizontally in the tangential direction of a drum 30D. The lower end face (light input face) 32D of the light guide member 18D is positioned to stand face to face with and close to a stimulable phosphor sheet 14D, and the other end face (light output face) is closely contacted with the photodetector 20. The light guide member 18D is provided with a dichroic optical plane 34D exhibiting the same characteristics as those of the dichroic optical plane 34B in the embodiment of Figure 5, and a stimulating ray reflection preventing film 32d. The stimulating rays B are made to impinge upon the light guide member 18D from outside thereof in the radial direction of the drum 30D, and are passed through the dichroic optical plane 34D to the stimulable phosphor sheet 14D. In this embodiment, the light guide member 18D and the photodetector 20 should preferably be maintained stationary, and the drum 30D should be rotated and moved axially for achieving the scanning.

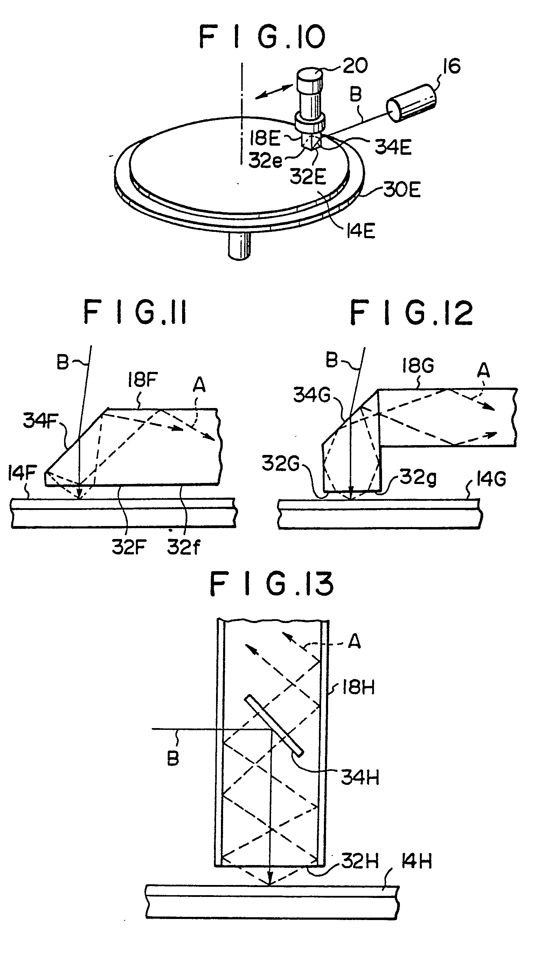

Figure 10 is a perspective view showing a further embodiment of the radiation image read-out apparatus in accordance with the present invention, wherein a circular stimulable phosphor sheet 14E is secured to a rotatable disk 30E. A light guide member 18E and a photodetector 20 which are the same as the light guide member 18C and the photodetector 20 in Figure 8 are moved radially on a plane on which the rotation axis of the disk 30E lies. The stimulating rays B are made to impinge upon a dichroic optical plane 34E from outside in the radial direction of the disk 30E, and are reflected by the dichroic optical plane 34E. Thus the stimulating rays B are made to impinge upon the stimulable phosphor sheet 14E via an end face (light input face) 32E of the light guide member 18E standing face to face with the stimulable phosphor sheet 14E. The light input face 32E is provided with a stimulating ray reflection preventing film 32e.

In the embodiments of Figures 8, 9 and 10, since the shapes of the light guide members 18C, 18D and 18E are simple, they can be formed and processed easily.

From the viewpoint of forming and processing, the light input faces 32A to 32E of the light guide members 18A to 18E should preferably be flat planes parallel with the surfaces of the stimulable phosphor sheets 14A to 14E. However, in order to improve the efficiency for guiding the light A emitted by the stimulable phosphor sheets 14A to 14E, the light input faces 32A to 32E may be formed as curved faces. Also, instead of incorporating the dichroic optical planes 34A to 34E within the light guide members 18A to 18E, the dichroic optical planes 34A to 34E may be overlaid on a transparent sheet positioned in the optical path between two light guide members spaced apart from each other.

Figures 11 and 12 are sectional views showing major parts of still further embodiments of the radiation image read-out apparatus in accordance with the present invention. In these embodiments, portions of light guide members 18F and 18G above the light emitting portions of stimulable phosphor sheets 14F and 14G are cut obliquely, and dichroic optical planes 34F and 34G for passing the stimulating rays B are overlaid on the cut surfaces. Lower end faces (light input faces) 32F and 32G of the light guide members 18F and 18G are provided with stimulating ray reflection preventing films 32f and 32g. The stimulating rays B passing through the dichroic optical planes 34F and 34G and entering the light guide members 18F and 18G come out of the light input faces 32F and 32G and impinge upon the stimulable phosphor sheets 14F and 14G. The light A emitted by the stimulable phosphor sheets 14F and 14G upon stimulation thereof enters the light guide members 18F and 18G from the light input faces 32F and 32G and is reflected by the dichroic optical planes 34F and 34G to photodetectors (not shown).

The stimulating rays B reflected by the surfaces of the stimulable phosphor sheets 14F and 14G are prevented by the stimulating ray reflection preventing films 32f and 32g from being reflected by the light input faces 32F and 32G, and do not impinge again upon the stimulable phosphor sheets 14F and 14G.

Figure 13 is a sectional view showing a major part of a still further embodiment of the radiation image read-out apparatus in accordance with the present invention. In this embodiment, a light guide member 18H is fabricated of two opposing sheets or of a cylinder. The inner surfaces of the light guide member 18H are optically treated so that they are permeable to the stimulating rays B and reflect the light A emitted by a stimulable phosphor sheet 14H. A dichroic optical plane 34H is positioned inside of the light guide member 18H. The stimulating rays B pass through the light guide member 18H and are reflected by the dichroic optical plane 34H onto the stimulable phosphor sheet 14H. On the other hand, the light A emitted by the stimulable phosphor sheet 14H is reflected by the inner surfaces of the light guide member 18H and is guided to a photodetector (not shown). In this case, a light input face 32H of the light guide member 18H may be open to the stimulable phosphor sheet 14H. It is of course possible to fabricate the light guide member 18H by use of a transparent member and to optically treat the outer surfaces of the light guide member 18H so that they are permeable to the stimulating rays B and reflect the light A emitted by the stimulable phosphor sheet 14H.

## Claims

1. A radiation image read-out apparatus provided with a stimulating ray optical system (16) for exposing a stimulable phosphor (14) carrying a radiation image stored therein to stimulating rays, a photodetector (20) for detecting light emitted by the stimulable phosphor upon exposure to said stimulating rays, and a light guide member (18A—H) for guiding the emitted light to said photodetector, said light guide member having one end face (32A—H) positioned close to the stimulable phosphor and the other end face optically connected to said photodetector, characterized by:

i) positioning a dichroic optical plane (34A—H), which selectively reflects either said stimulating rays or said light emitted by the stimulable phosphor and selectively passes the other, between the one and the other end face of said light guide member, and

ii) positioning said stimulating ray optical system so that said stimulating rays (B) directly impinge upon said dichroic optical plane (34A—H) and come out of said one end face (32A—H) of said light guide member positioned close to the stimulable phosphor by being reflected by said dichroic optical plane or by passing therethrough, thereby stimulating the stimulable phosphor (14A—H).

2. An apparatus as defined in Claim 1 wherein said one end face (32) of said light guide member positioned close to the stimulable phosphor is provided with a stimulating ray reflection preventing film (32a—g) for preventing reflection of said stimulating rays.

3. An apparatus as defined in Claim 2 wherein said stimulating ray reflection preventing film (32a—g) is a deposited thin film of a material exhibiting a refractive index smaller than the refractive index of the material of said light guide member.

4. An apparatus as defined in Claim 3 wherein the optical thickness of said deposited thin film (32a—g) is a quarter of the wavelength of said stimulating rays.

5. An apparatus as defined in Claim 3 wherein the material of said deposited thin film (32a—g) and the material of said light guide member satisfy the condition $n_1 = \sqrt{n_2}$ where $n_1$ denotes the refractive index of the material of said deposited thin film and $n_2$ denotes the refractive index of the material of said light guide member.

6. An apparatus as defined in Claim 2 wherein said stimulating ray reflection preventing film (32a—g) also prevents reflection of said light emitted by the stimulable phosphor.

7. An apparatus as defined in any of Claims 1 to 6 wherein said light guide member (18A) has a generally bent shape, and said dichroic optical plane (34A) is positioned inside of said light guide member at an angle of 45° with respect to said one end face of said light guide member positioned close to the stimulable phosphor.

8. An apparatus as defined in any of Claims 1 to 6 wherein said light guide member (18B) is constituted by a sheet-like first light guide member (18Ba) and a square bar-like second light guide member (18Bb) joined to an end face of said first light guide member, a lower end face (32B) of said second light guide member being positioned to stand face to face with and close to the stimulable phosphor, and said dichroic optical plane (34B) is positioned above said lower end face of said second light guide member at an angle with respect thereto.

9. An apparatus as defined in any of Claims 1 to 6 wherein said stimulable phosphor is secured to a cylindrical drum (30C), and said light guide member (18C) has a long bar-like shape, said light guide member being positioned in the radial direction of said drum and moved in parallel with the rotation axis of said drum.

10. An apparatus as defined in any of Claims 1 to 6 wherein said stimulable phosphor is secured to a cylindrical drum (30D), and said light guide member (18D) has a long bar-like shape and is positioned in the tangential direction of said drum (30D), said drum being rotated and moved in the direction of the rotation axis thereof.

11. An apparatus as defined in any of Claims 1 to 6 wherein said stimulable phosphor (14E) has a circular shape and is secured to a rotatable disk (30E), and said light guide member (18E) is moved in the radial direction of said disk on a plane on which the rotation axis of said disk lies.

12. An apparatus as defined in any of Claims 1 to 6 wherein said light guide member (18H) is fabricated of two sheets standing face to face with each other and treated so that the light guide member is permeable to said stimulating rays and reflects said light emitted by the stimulable phosphor, and said dichroic optical plane (34H) is positioned inside of said light guide member.

13. An apparatus as defined in any of Claims 1 to 6 wherein said light guide member is fabricated of a cylinder (18H) and is treated so that it is permeable to said stimulating rays and reflects said light emitted by the stimulable phosphor, and said dichroic optical plane (34H) is positioned inside of said light guide member.

**Patentansprüche**

1. Vorrichtung zum Auslesen von Strahlungsbildern, die mit einem optischen System (16) für Anregungsstrahlung ausgestattet ist, um einen anregbaren Leuchtstoff (14), der ein darin gespeichertes Strahlungsbild trägt, einer Anregungsstrahlung auszusetzten, mit einem Fotodetektor (20), der Licht detektiert, das vom anregbaren Leuchtstoff bei der Belichtung mit den Anregungsstrahlen emittiert wird und mit einem lichtleitenden Element (18A bis H), das das emittierte Licht zum Fotodetektor leitet, wobei das Lichtleiterelement eine Endfläche (32A bis H) hat, die nahe des anregbaren Leuchtstoffs angeordnet ist sowie eine andere Endfläche, die optisch an den Fotodetektor angeschlossen ist, dadurch gekennzeichnet,

i) daß eine zweifarbige optische Ebene (34A bis H) zwischen der einen und der anderen Endfläche des lichtleitenden Elements angeordnet wird, die selektiv entweder die Anregungsstrahlung oder das von dem anregbaren Leuchtstoff emittierte Licht reflektiert und das jeweils andere selektiv hindurchläßt, und daß

ii) das optische Anregungsstrahlungssystem so angeordnet wird, daß die Anregungstrahlen (B) direkt auf diese optische Zweifarbenebene (34A bis H) auftreffen und an der einen Endfläche (32A bis H) des lichtleitenden Elements austreten, die nahe bei dem anregbaren Leuchtstoff angeordnet ist, indem diese Strahlung durch die zweifarbige optische Ebene reflektiert wird oder aber dort hindurchtritt, so daß der anregbare Leuchtstoff (14A bis H) angeregt wird.

2. Vorrichtung nach Anspruch 1, wobei die eine Endfläche (32) des lichtleitenden Elements, die in der Nähe des anregbaren Leuchtstoffs angeordnet ist, mit einer Schicht (32a—g) versehen ist, die eine Reflexion der Anregungsstrahlung verhindert.

3. Vorrichtung nach Anspruch 2, wobei die die Reflexion der Anregungsstrahlung verhindernde Schicht (32a—g) als Dünnschicht eines Materials aufgetragen ist, das einen Brechungsindex hat, der kleiner als der Brechungsindex des Materials des lichtleitenden Elements ist.

4. Vorrichtung nach Anspruch 3, wobei die optische Dicke der aufgetragenen Dünnschicht (32a—g) 1/4 der Wellenlänge der Anregungstrahlung beträgt.

5. Vorrichtung nach Anspruch 3, wobei das Material der aufgetragenen Dünnschicht (32a—g) und das Material des lichtleitenden Elements die Bedingung $n_1 = \sqrt{n_2}$ erfüllen, wobei $n_1$ für den Brechungsindex des Materials der Dünnschicht und $n_2$ für den Brechungsindex des Materials des lichtleitenden Elements steht.

6. Vorrichtung nach Anspruch 2, wobei die die Reflexion der Anregungsstrahlung verhindernde Schicht (32a bis g) auch die Reflexion des Lichts verhindert, das von dem anregbaren Leuchtstoff emittiert wird.

7. Vorrichtung nach irgendeinem der Ansprüche 1 bis 6, wobei das lichtleitende Element (18A) allgemein bogenförmig ist und wobei die zweifarbige optische Ebene (34A) innerhalb des lichtleitenden Elements in einem Winkel von 45° bezüglich der einen Endfläche des lichtleitenden Elements, die nahe des anregbaren Leuchtstoffs angeordnet ist, angeordnet ist.

8. Vorrichtung nach irgendeinem der Ansprüche 1 bis 6, wobei das lichtleitende Element (18B) von einem blattförmigen ersten lichtleitenden Element (18Ba) und einem zweiten, armartigen quadratischen lichtleitenden Element (18Bb), das eine Endfläche des ersten lichtleitenden Elements angebunden ist, gebildet wird, wobei eine untere Endfläche (32B) des zweiten lichtleitenden Elements so angeordnet ist, daß sie Fläche auf Fläche nahe an dem anregbaren Leuchtstoff liegt, und wobei die zweifarbige optische Ebene (34B) oberhalb dieser unteren Endfläche des zweiten lichtleitenden Elements in einem Winkel dazu angeordnet ist.

9. Vorrichtung nach irgendeinem der Ansprüche 1 bis 6, wobei der anregbare Leuchtstoff auf einer zylindrischen Trommel (30C) befestigt ist und wobei das lichtleitende Element (18C) die Form eines länglichen Armes hat, und wobei das lichtleitende Element in Radialrichtung der Trommel angeordnet ist und parallel zur Drehachse der Trommel bewegt wird.

10. Vorrichtung nach irgendeinem der Ansprüche 1 bis 6, wobei der anregbare Leuchtstoff an einer zylindrischen Trommel (30D) befestigt ist und wobei das lichtleitende Element (18D) die Form eines länglichen Armes hat und in Tangentialrichtung der Trommel (30D) angeordnet ist, und wobei die Trommel in Richtung ihrer Drehachse gedreht und bewegt wird.

11. Vorrichtung nach irgendeinem der Ansprüche 1 bis 6, wobei der anregbare Leuchtstoff (14E) kreisförmig ist und auf einer Drehscheibe (30E) angeordnet ist und wobei das lichtleitende Element (18E) in Radialrichtung der Scheibe in einer Ebene, in der die Drehachse der Scheibe liegt, bewegt wird.

12. Vorrichtung nach irgendeinem der Ansprüche 1 bis 6, wobei das lichtleitende Element (18H) aus zwei Platten gebildet ist, die Fläche zu Fläche zueinanderstehen und so behandelt sind, daß das lichtleitende Element für Anregungsstrahlung durchlässig ist und das Licht reflektiert, das vom anregbaren Leuchtstoff emittiert wird und wobei die zweifarbig optische Ebene (34H) innerhalb des lichtleitenden Elements angeordnet ist.

13. Vorrichtung nach irgendeinem der Ansprüche 1 bis 6, wobei das lichtleitende Element aus einem Zylinder (18H) hergestellt und so behandelt ist, daß es für Anregungsstrahlung durchlässig ist und das vom anregbaren Leuchtstoff emittierte Licht reflektiert und wobei die zweifarbige optische Ebene (34H) innerhalb des lichtleitenden Elements angeordnet ist.

**Revendications**

1. Dispositif de reproduction d'image de rayonnement qui comprend un système optique (16) de rayons de stimulation pour exposer une substance luminescente stimulable (14) dans laquelle est emmagasinée une image de rayonnement à des rayons de stimulation, un photodétecteur (20) pour détecter la lumière émise par la substance luminescente stimulable lors de l'exposition auxdits rayons de stimulation, et un organe de guidage de lumière (18A—H) pour guider la lumière émise vers ledit photodétecteur, ledit organe de guidage de lumière présentant une face d'extrémité (32A—H) située près de la substance luminescente stimulable et l'autre face d'extrémité connectée optiquement audit photodétecteur, caractérisé par

(i) le positionnement d'un plan optique dichroïque (34A—H), qui réfléchit sélectivement lesdits rayons de stimulation ou ladite lumière émise par la substance luminescente stimulable et qui transmet sélectivement l'autre de ces rayonnements, entre l'une et l'autre face d'extrémité dudit organe de guidage de lumière, et,

(ii) le positionnement dudit système optique de rayons de stimulation de sorte que lesdits rayons de stimulation (B) frappent directement ledit plan optique dichroïque (34A—H) et sortent de ladite première face d'extrémité (32A—H) dudit organe de guidage de lumière située près de la substance luminescente stimulable par réflexion par ledit plan optique ou par passage à travers celui-ci, afin de stimuler la substance luminescente stimulable (14A—H).

2. Dispositif suivant la revendication 1, dans lequel ladite première face d'extrémité (32) dudit organe de guidage de lumière, située près de la substance luminescente stimulable, comporte un film (32a—g) empêchant la réflexion des rayons de stimulation, pour empêcher la réflexion desdits rayons de stimulation.

3. Dispositif suivant la revendication 2, dans lequel ledit film (32a—g) empêchant la réflexion des rayons de stimulation est un film déposé mince en une matière ayant une indice de réfraction inférieur à l'indice de réfraction de la matière dudit organe de guidage de lumière.

4. Dispositif suivant la revendication 3, dans lequel l'épaisseur optique dudit film déposé mince (32a—g) représente un quart de la longueur d'onde des dits rayons de stimulation.

5. Dispositif suivant la revendication 3, dans lequel la matière dudit film déposé mince (32a—g) et la matière dudit organe de guidage de lumière répondent à la condition $n_1 = \sqrt{n_2}$ dans laquelle $n_1$ désigne l'indice de réfraction de la matière dudit film déposé mince et $n_2$ désigne l'indice de réfraction de la matière dudit organe de guidage de lumière.

6. Dispositif suivant la revendication 2, dans lequel ledit film (32a—g) empêchant la réflexion des rayons de stimulation empêche également la réflexion de la dite lumière émise par la substance luminescente stimulable.

7. Dispositif suivant l'une quelconque des revendications 1 à 6, dans lequel ledit organe de guidage de lumière (18A) a une configuration sensiblement courbe et ledit plan optique dichroïque (34A) est situé à l'intérieur dudit organe de guidage de lumière, à un angle de 45° par rapport à ladite première face d'extrémité dudit organe de guidage de lumière placée près de la substance luminescente stimulable.

8. Dispositif suivant l'une quelconque des revendications 1 à 6, dans lequel ledit organe de guidage de lumière (18B) est constitué d'un premier organe de lumière (18Ba) en forme de feuille et d'un deuxième organe de guidage de lumière (18Bb) en forme de barreau carré relié à une face d'extrémité dudit premier organe de guidage de lumière, une face d'extrémité inférieure (32B) dudit deuxième organe de guidage de lumière étant placée face à face et près de la substance luminescente stimulable, et ledit plan optique dichroïque (34B) est placé au-dessus de ladite face d'extrémité inférieure dudit deuxième organe de guidage de lumière suivant un angle par rapport à cette face.

9. Dispositif suivant l'une quelconque des revendications 1 à 6, dans lequel ladite substance luminescente stimulable est fixée à un tambour cylindrique (30C) et ledit organe de guidage de lumière (18C) est en forme de barreau long, ledit organe de guidage de lumière étant disposé dans la direction radiale dudit tambour et déplacé en parallèle à l'axe de rotation du dit tambour.

10. Dispositif suivant l'une quelconque des revendications 1 à 6, dans lequel ladite feuille luminescente stimulable est fixée à un tambour cylindrique (30D) et ledit organe de guidage de lumière (18D) est en forme de barreau long et est disposé dans la direction tangentielle dudit tambour (30D), ledit tambour étant mis en rotation et déplacé dans la direction de son axe de rotation.

11. Dispositif suivant l'une quelconque des revendications 1 à 6, dans lequel ladite feuille luminescente stimulable (14E) a une forme circulaire et est fixée à un disque rotatif (30E), et ledit organe de guidage de lumière (18E) est déplacé dans la direction radiale dudit disque sur un plan sur lequel se trouve l'axe de rotation dudit disque.

12. Dispositif suivant l'une quelconque des revendications 1 à 6, dans lequel ledit organe de guidage de lumière (18H) est constitué de deux feuilles mutuellement face à face et traitées de sorte que l'organe de guidage de lumière est perméable auxdits rayons de stimulation et réfléchit ladite lumière émise par la feuille luminescente stimulable, et ledit plan optique dichroïque (34H) est situé à l'intérieur dudit organe de guidage de lumière.

13. Dispositif suivant l'une quelconque des revendications 1 à 6, dans lequel ledit organe de guidage de lumière est constitué d'un cylindre (18H) et est traité de sorte qu'il est perméable auxdits rayons de stimulation et réfléchit ladite lumière émise par la feuille luminescente stimulable, et ledit plan optique dichroïque (34H) est situé à l'intérieur dudit organe de guidage de lumière.

# F I G. I

STIMULATING RAY SOURCE

16

B

PHOTO-DETECTOR

IMAGE PROCESSING

REPRODUCING

10

12

14

18

A

22

20

24

26

# F I G. 2

20

18A

16

B

III

III

30A

14A

32A

34A

36A

# F I G. 3

# F I G. 4

# F I G.5

# F I G.6

F I G.7

F I G.8

F I G.9

# F I G .10

# F I G .11

# F I G .12

# F I G .13